# EUROPEAN PATENT APPLICATION

(11) **EP 4 759 787 A1**
(43) Date of publication of application: **17.06.2026**
(21) Application number: 25163719.5
(22) Date of filing: 14.03.2025
(51) Int. Cl.: C04B 35/56, C04B 35/58, C04B 35/626, C04B 41/50

(54) **METHOD FOR PRODUCING A HIGH-TEMPERATURE REFRACTORY COMPOSITE FROM BORON CARBIDE AND AN INTERMETALLIC PHASE OF THE TI-AL SYSTEM**

(30) Priority: 13.12.2024 PL 45055624
(71) Applicant: Akademia Gorniczo-Hutnicza im. Stanislawa Staszica w Krakowie, 30-059 Krakow (PL)
(72) Inventor: Kozien, Dawid, 31-586 Kraków (PL); Pedzich, Zbigniew, 30-619 Kraków (PL); Nieroda, Pawel, 30-058 Kraków (PL)
(74) Representative: Pietruszynska, Elzbieta

(57) **Abstract**

The subject matter of the invention is a method for producing a high-temperature refractory composite from boron carbide B₄C and an intermetallic phase of the Ti-Al system, which is characterized in that a powder of the intermetallic phase of the Ti-Al system and optionally boron B is added to the boron carbide B₄C powder, and then the whole is mixed in an isopropyl alcohol environment for 1 to 60 minutes and dried until complete alcohol evaporation for 20 to 120 minutes, after which the obtained powder is granulated, and then the shaped pieces are pre-formed and subjected to an isostatic pressing at a pressure of 100 to 200 MPa, and the obtained compacts are subjected to a free sintering process in an argon or nitrogen atmosphere, at a temperature of 1050 to 1750°C, with a temperature increase of 2 to 10°C/minute and a holding time at the maximum temperature of 5 to 30 minutes, to obtain the high-temperature refractory composite,
wherein as the intermetallic phase of the Ti-Al system is used:
a) TiAl in a B₄C:TiAl:B molar ratio of 1:2:1, to obtain a high-temperature refractory composite TiB₂-AlC-AlB₂-TiAl consisting of 40 to 70% TiB₂, 2 to 25% AlC, 5 to 40% AlB₂ and 0.2 to 1.0% TiAl by weight, or
b) Ti₃Al in a B₄C:Ti₃Al molar ratio of 4:3, to obtain a high-temperature refractory composite TiB₂-TiC-AlB₂-Ti₃Al consisting of 30 to 70% TiB₂, 10 to 30% TiC, 5 to 40% AlB₂ and 0.1 to 1.0% Ti₃Al by weight, or
c) TiAl₃ in a B₄C:TiAl₃ molar ratio of 6:5, to obtain a high-temperature refractory composite TiB₂-Al₄C₃-AlB₂-TiAl₃ consisting of 30 to 70% TiB₂, 5 to 30% Al₄C₃, 5 to 40% AlB₂ and 0.1 to 1.5% TiAl₃ by weight,

and the process efficiency is at least 99%.

## Description

### Field of invention

The subject matter of the invention is a method for producing a high-temperature refractory composite from boron carbide and an intermetallic phase of the Ti-Al system, intended for components of gas turbines, components of rocket engines and structural components of flying vehicles operated at high temperatures. Such a composite, belonging to a group of Ultra High Temperature Ceramics (UHTC), is characterized by high chemical resistance, corrosion resistance and thermal shock. Due to high thermal diffusion, it is possible to use high-temperature refractory composites as elements of aircraft coverings or protective layers of tools and parts operating at high temperatures. The characteristic high corrosion resistance and thermal shock also enables their use for cutting elements of cutting tools, parts of machines resistant to abrasion, electrodes for electro-erosion machining, or materials for armour.

### Background of the invention

Ultra High Temperature Ceramic Composites (UHTC composites) are a class of materials with a low density and a high melting point, close to 3000°C or higher, which can be used for a long time at temperatures above 1650°C, while maintaining high hardness and stiffness, and above all, chemical resistance. Chemically, UHTC composites are materials comprising two or more phases in which boron B, carbon C or nitrogen N are combined with one of the transition metals, such as zirconium Zr, hafnium Hf, titanium Ti, niobium Nb and tantalum Ta, (e.g. phases: HfB₂, ZrB₂, TiB₂, NbB₂, TaB₂, TiC, SiC, B₄C, BN).

The most commonly used techniques for producing UHTC composites are well known techniques: Hot-pressing and Spark Plasma Sintering (SPS).

Currently, materials from UHTC group are usually synthesized by joint sintering of a mixture of powders of phases constituting a composite with the possible addition of carbon in various forms (graphite, carbon black, nanotubes) as a phase that intensifies diffusion processes during sintering. The limitation of this method of synthesis is the necessity to use high temperatures, which cause grain growth in the sintered composite.

### Description of the state of the art

From a patent application PL425041 A1 there is known a ceramic composite from the group of UHTC materials based on hafnium diboride HfB₂ and a method of its production, wherein additives in the form of silicon carbide SiC and/or boron carbide B₄C in an amount of 8 vol.% to 20 vol.% and graphene nanoflakes with an average grain size <4 nm in an amount of 2 vol.% to 4 vol.% are added to a powder with hafnium diboride HfB₂ in an amount of 76 vol.% to 92 vol.% and the starting mixture is subjected to high-pressure sintering by the HPHT (High Pressure, High Temperature) method under a pressure of 7.2 GPa at a temperature of 1700±50°C.

From a patent description EP2021302 B1 there is known a method for producing high-density UHTC composites in the ZrB₂-SiC-ZrC system, wherein zirconium powders having a purity higher than 98.5% and a grain size smaller than 44 µm are dry mixed with boron carbide powder having a purity higher than 99.0% and a grain size smaller than 44 µm and then mixed with graphite powder having a grain size in the range of 1 - 2 µm. A mixture thus obtained is synthesized using the Self-propagating High-temperature Synthesis (SHS) method and then sintered using the Electric Current Activated Sintering (ECAS) method at temperatures ranging from 1600°C to 1900°C and held at the maximum temperature for 10 to 20 minutes.

A patent description CN108484171B describes a method for producing UHTC composites of B₄C-ZrB₂ system, wherein the composite powder is produced in the process of sintering a mixture of B₄C, ZrB₂ powders, carbon black and metallic silicon. The mixture of powders is isostatically pressed in the pressure range from 100 to 500 MPa, and then is freely sintered in the temperature range from 1900 to 2300°C with holding at the maximum temperature for 0.5 to 3 hours.

A patent description PL243571 B1 describes a method for obtaining a high-temperature refractory composite from boron carbide and an intermetallic compound of the Ti-Si system, wherein titanium silicide Ti₅Si₃ and carbon C are added to boron carbide B₄C powder in a molar ratio of B₄C:Ti₅Si₃:C of 5:2:1, and the whole is mixed in an isopropyl alcohol environment for 20 to 60 minutes and dried until complete alcohol evaporation for 20 to 120 minutes, after which the shaped pieces are pre-formed and subjected to an isostatic pressing under a pressure of 100 to 200 MPa, and the obtained compacts are subjected to a free sintering process in an argon atmosphere, at a temperature of 1650 to 1750 °C, with a temperature increase of 2 to 10 °C/minute and a holding time at the maximum temperature of 5 to 30 minutes, to obtain the TiB₂-TiC-SiC-Ti₅Si₃ composite consisting of 70.0 to 75.0% TiB₂, 0.5 to 2.5% TiC, 20.0 to 27.5% SiC and 0.2 to 1.0% Ti₅Si₃ by weight, and the process efficiency is at least 99%. The obtained composite is characterized by a high content of TiB₂ and SiC in its composition, however the temperature of the composite synthesis is high, i.e. from 1650 to 1750°C. In the presented solution, only the TiB₂ phase was responsible for the increased thermal resistance of the obtained composite.

A promising group of high-temperature refractory composites are materials of the B₄C-Ti-Al system, which show a very favorable combination of low density with very high hardness and refractoriness.

Methods for producing UHTC composites of the TiAl/B₄C system have been described in scientific publications. For example, a publication by Zhang, W; Gao, L; Lei, Y. et al. TiAl/B4C composite fabricated by high energy ball milling and hot press. Mater. Sci. Eng. 2010, 527 (27-28), 7436-7441, doi: 10.1016/j.msea.2010.08.041, describes a method for the synthesis of a composite of the B₄C-Ti-Al system, wherein the starting materials were aluminum Al, titanium Ti and boron carbide B₄C powders. The powders were mixed in the ratio of 10 to 40 wt.% Ti and Al and 90 to 40 wt.% B₄C. The mixed powders were dry milled for up to 30 h at the rate of 380 rpm in a high-energy planetary ball mill with 1.2 wt.% of stearic acid as a process control agent. The powders obtained by grinding in a planetary mill with a variable weight ratio of titanium and aluminum were sieved and sintered in a graphite matrix.

In turn, in a publication by Shu, S.; Qiu, F.; Lin, Y. et al. Effect of B4C size on the fabrication and compression properties of in situ TiB2 -Ti2AlC/TiAl composites. J. Alloys Compd. 2013, 551, 88-91, doi: 10.1016/j.jallcom.2012.09.123, a method for the synthesis of TiB₂-Ti₂AlC/TiAl composite, wherein the starting materials were powders of titanium (Ti, purity 99.5%), aluminum (Al, purity 99%) and three types of boron carbide (B C, purity 99.5%) is described. The furnace heating rate was about 30 K/min, and a temperature was measured using a Ni-Cr/Ni-Si thermocouple.

In a publication by Dong, L.; Zhang, W.; Li, J. et al. Fabrication of TiAl/B4C Composites from an Al-Ti-B4C System Reinforced by TiC, TiB2 In-situ. Adv. Material. Res. (Durnten-Zurich, Switz.) 2009, 79-82, 477-480, doi: 10.4028/www.scientific.net/AMR.79-82.477, there is presented a method for producing TiAl/B₄C composites, wherein titanium (Ti, purity 99.5%) and aluminum (Al, purity 99.5%) powders were used as starting materials. A synthesis of powders was carried out by mechanical fusion in a planetary mill using zirconium grinding media with a ball-to-powder mass ratio of 10:1 at room temperature. The inner lining of the vessel and the balls (8 mm in diameter) were made of zirconium oxide. After grinding for 30 h, B₄C powder was added and further grinded using ZrO₂ balls for 12 h. The dried powder mixtures were hot pressed and sintered at 1700 ~ 1750°C for 1 hour under a pressure of 20 MPa in a vacuum atmosphere.

In turn, in the above-mentioned article by Shu, S.; Qiu, F.; Lin, Y. et al. Effect of B₄C size on the fabrication and compression properties of in situ TiB₂-Ti₂AlC/TiAl composites, it was determined that a particle size of B₄C plays an important role in the in situ producing process of TiB₂-Ti₂AlC/TiAl composites and significantly influences compressive properties and hardness.

In an article by Song, Q.; Zhang, Z.; Yin, S. et al. Microstructure and mechanical properties of B4C matrix composites sintered with (TiB2+Al). J. Phys.: Conf. Ser. 2020, 1676, 012046, doi: 10.1088/1742-6596/1676/1/012046, there is presented a synthesis of TiB₂-Al-B₄C composites, where commercial powders of B₄C with an average size of 1 µm, TiB₂ with an average size of 1 µm, and Al with an average size of 50 nm were used for the synthesis. The powders were mixed in a proportion of 73.5 wt.% B₄C, 24.5 wt.% TiB₂, and 2 wt.% Al and milled for 3 h at a rotational speed of 300 rpm. The obtained suspension was evaporated and dried at a temperature 70°C. SPS technology was used to sinter the B₄C-TiB₂-Al composite to 1650°C at a pressure of 80 MPa in a vacuum chamber of 0.5 Pa for 5 minutes. Commercially pure boron carbide prepared and sintered in the same way as the composite was used to compare the results of the proposed composite. The average heating rate was about 100°C/min in both cases.

### The objective of the invention

As can be seen from the state of the art presented above, a high temperature, usually exceeding 2000°C is often required for complete reaction and subsequent concentration of the solid components of the reaction system, as well as the use of specialized equipment for firing, i.e. vacuum furnaces or furnaces with a protective atmosphere, and control and measurement equipment, which generates high costs that determine the economics of technological processes.

In the previously known solutions for the synthesis of high-temperature refractory composites from boron carbide and an intermetallic phase of the Ti-Al system, metallic powders of titanium and aluminum are used, which adversely affect both the temperature of composite synthesis, which is high, and the homogenization of the powders used and the presence, in the produced composite, free carbon, which lowers the strength of the composites. Therefore, the problem to be solved by the invention was to develop a method for producing a high-temperature refractory composite from boron carbide and the intermetallic phase of the Ti-Al system, ensuring, in the produced composites, an increase of phases, which simultaneously increase the possibility of capturing free carbon during synthesis, enable the formation of more amount of phases with increased thermal resistance and allow for a significant temperature lowering of the composites synthesis.

Therefore, the objective of the method according to the present invention was to eliminate from the final composition of the composite unreacted carbon C, which is formed as a result of decomposition of boron carbide B₄C and negatively affects the strength of the obtained materials. Moreover, the objective of the proposed solution was to obtain the highest possible content of the TiB₂ phase with the highest melting temperature (T=3325°C) among the composite components, which improves the refractoriness of the produced composite. Additionally, the objective of the invention was to lower the temperature of the process for producing a high-temperature refractory composite from boron carbide and an intermetallic phase of the Ti-Al system, which will reduce the production costs thereof, which are high in currently known methods.

The above-mentioned objectives were achieved by the solution presented in the attached patent claims. The use of specific intermetallic phases from the Ti-Al system in the form of TiAl, Ti₃Al and TiAl₃ and their proper proportions in accordance with the invention allows for the temperature lowering in the composite synthesis and increasing in the liquid phase during sintering, which simultaneously increases the homogeneity of the resulting composites.

### The essence of the invention

The subject matter of the present invention is a method for producing a high-temperature refractory composite from boron carbide B₄C and an intermetallic phase of the Ti-Al system, which is characterized in that a powder of the intermetallic phase of the Ti-Al system and optionally boron B is added to the boron carbide B₄C powder, and then the whole is mixed in an isopropyl alcohol environment for 1 to 60 minutes and dried until complete alcohol evaporation for 20 to 120 minutes, after which the obtained powder is granulated, and then the shaped pieces are pre-formed and subjected to an isostatic pressing at a pressure of 100 to 200 MPa, and the obtained compacts are subjected to a free sintering process in an argon or nitrogen atmosphere, at a temperature of 1050 to 1750°C, with a temperature increase of 2 to 10°C/minute and a holding time at the maximum temperature of 5 to 30 minutes, to obtain the high-temperature refractory composite,
wherein as the intermetallic phase of the Ti-Al system is used:
a) TiAl in a B₄C:TiAl:B molar ratio of 1:2:1, to obtain a high-temperature refractory composite TiB₂-AlC-AlB₂-TiAl consisting of 40 to 70% TiB₂, 2 to 25% AlC, 5 to 40% AlB₂ and 0.2 to 1.0% TiAl by weight, or
b) Ti₃Al in a B₄C:Ti₃Al molar ratio of 4:3, to obtain a high-temperature refractory composite TiB₂-TiC-AlB₂-Ti₃Al consisting of 30 to 70% TiB₂, 10 to 30% TiC, 5 to 40% AlB₂ and 0.1 to 1.0% Ti₃Al by weight, or
c) TiAl₃ in a B₄C:TiAl₃ molar ratio of 6:5, to obtain a high-temperature refractory composite TiB₂-Al₄C₃-AlB₂-TiAl₃ consisting of 30 to 70% TiB₂, 5 to 30% Al₄C₃, 5 to 40% AlB₂ and 0.1 to 1.5% TiAl₃ by weight,
and the process efficiency is at least 99%.

Preferably, the mixing of the powders is carried out for 20 to 60 minutes in a rotary-vibratory mill or for 1 to 40 minutes in a planetary mill.

### Beneficial effects and advantages of the invention

The method for producing a high-temperature refractory composite from boron carbide B₄C and an intermetallic phase of the Ti-Al system, developed by the inventors of the present invention, which consists in mixing starting powders in the form of boron carbide B₄C, the intermetallic phase of the Ti-Al system selected from TiAl, Ti₃Al and TiAl₃ and optionally boron B in an alcohol environment, forming shaped pieces from the powder mixture and sintering them, enables, depending on the type of the intermetallic phase used, i.e. TiAl, Ti₃Al and TiAl₃, to control the phase composition of the obtained composites, their thermal parameters, microstructure and thermal properties.

The use, in the method according to the invention, of a set of substrates comprising the boron carbide B₄C powder in combination with the intermetallic phase of the Ti-Al system, made it possible to apply a lower than previously sintering temperature, namely in the range of 1050 to 1750°C. It is also not required to use energy-consuming sintering methods that require specialized equipment, such as SPS or hot pressing. This is due to a chemical reaction that takes place between the substrates facilitating concentration during sintering. In practice, there are possible methods for producing UHTC composites comprising B₄C powder in combination with an intermetallic phase selected from the Ti-Al system, with the use of various intermetallic phases, i.e. TiAl, Ti₃Al and TiAl₃. The reaction mechanism is related to the intermetallic phase type used and it unexpectedly turned out that the simple and lower-temperature method according to the invention is possible only due to the use of phases in the form of TiAl, Ti₃Al and TiAl₃ in combination with the appropriate molar proportions of the substrates used. The process leads to the formation of new phases, such as AlC and AlB₂ and the elimination of carbon from the composition of the obtained composite. This is an unexpected effect, especially in the case of using a commercial boron carbide B₄C as a substrate, which usually contains an addition of carbon in the form of graphite. As a result, the obtained high-temperature refractory composite shows the higher mechanical strength and resistance to brittle fracture, and is characterized by better mechanical parameters, what was proved in tests conducted by the inventors, in which the composites obtained in accordance with the invention were subjected to a thermal ablation test in an acetylene-oxygen flame at a temperature of 1750 to 1800°C.

The high-temperature refractory composite obtained by the method according to the invention is also characterized by a very good homogeneity of the distribution of component phases in the microstructure, which makes it possible to obtain a high density and chemical purity of the composite, in which the amount of unreacted phase from the starting reactants is below 1%. A great advantage is that, depending on the intermetallic phase used and the occurrence of reactive sintering during synthesis, the composite synthesis temperature can be lowered to 1000°C.

The advantage of the high-temperature refractory composite produced according to the invention is also a low density of the material. The advantageous phase composition of the composite, i.e. the high content of the TiB₂ phase compared to the composites known from the prior art produced from boron carbide and an intermetallic phase of the Ti-Al system, enables the obtained composite to operate at high temperatures for a longer time while maintaining advantageous mechanical properties.

### Brief description of the drawings

The method for producing a high-temperature refractory composite from boron carbide and an intermetallic phase of the Ti-Al system according to the invention is explained below in practical embodiments and in drawings, in which:
**FIG. 1** shows a diffraction pattern of the phase composition of the high-temperature refractory composite produced according to the invention with the addition of the TiAl intermetallic phase,
**FIG. 2** shows a scanning microscope image (magnification 500x) of the surface microstructure of the sintered high-temperature refractory composite produced according to the invention with the addition of the TiAl intermetallic phase,
**FIG.3** shows a scanning microscope image (magnification 10,000x) of the fracture microstructure of the high-temperature refractory composite produced according to the invention with the addition of the TiAl intermetallic phase,
**FIG. 4** shows a surface of a sample obtained by thermal ablation of the high-temperature refractory composite produced according to the invention at a temperature of 1750°C in an acetylene-oxygen flame for 10 s,
**FIG. 5** shows a surface of a sample obtained by thermal ablation of the high-temperature refractory composite produced according to the invention at a temperature of 1800°C in an acetylene-oxygen flame for 5 minutes.

### Embodiments of the invention

The present invention will be described below in detail with reference to the accompanying figures and embodiments. The present invention is not limited to the specific embodiments described therein.

### Example 1

The following powders were prepared: boron carbide B₄C, TiAl intermetallic phase and boron B. Commercial boron carbide B₄C powder (Boron carbide B₄C GRADE HS from Höganäs) comprising the following phases: B₁₃C₂ (99%) and graphite (1%) was used. The self-propagating high-temperature synthesis SHS process was used to produce TiAl powder. Ti and Al powders were used in a molar ratio of 1:1.2. The mixture of powders was placed in a reactor with an argon atmosphere at an overpressure of 1.5 atm. The SHS synthesis reaction was initiated locally by heat released during the flow of current through a graphite foil placed in the mixture of powders. The current intensity was 200 A and the flow time was 1 minute.

The TiAl intermetallic phase and boron B were added to the boron carbide B₄C powder in a B₄C:TiAl:B molar ratio of 1:2:1, and then the whole was mixed in a rotary-vibratory mill in an isopropyl alcohol environment for 30 minutes, then dried until complete alcohol evaporation for 30 minutes. The obtained powders were pre-formed into disks having a diameter of 20 mm and a height of 10 mm and subjected to an isostatic pressing at a pressure of 200 MPa. The obtained compacts were subjected to the process of free sintering in an argon atmosphere at a temperature of 1750°C, with a temperature increase of 10°/minute and a holding time at the maximum temperature of 5 minutes.

TiB₂-AlC-AlB₂-TiAl composite consisting of 63.2% TiB₂, 11.6% AlC, 24.9% AlB₂ and 0.4% TiAl by weight was obtained. The process efficiency was 99.6%.

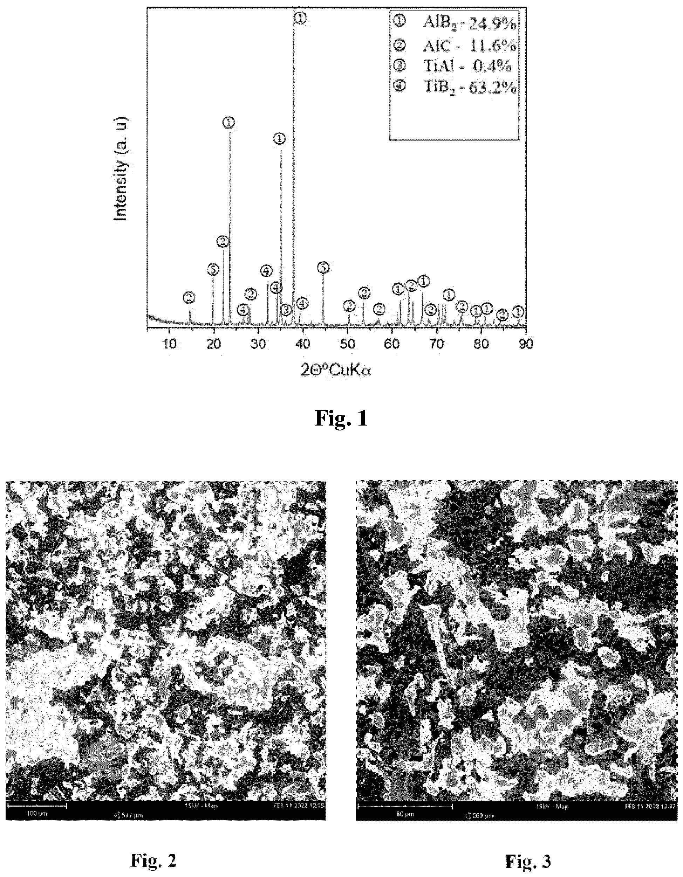

As it results from the diffraction pattern of the phase composition of the produced high-temperature refractory composite (Fig. 1), the obtained composite is characterized by a high content of the TiB₂ phase, and moreover, it does not contain free carbon C. The apparent density of the TiB₂-AlC-AlB₂-TiAl composite is 3.0 g/cm³, which corresponds to 90% of the theoretical density of the material with such a phase composition. The obtained composite is characterized by a homogeneous distribution of phases and grain sizes in the composite, as evidenced by the images of the surface (Fig. 2) and fracture (Fig. 3) of the composite.

### Example 2

The following powders were prepared: boron carbide B₄C, TiAl intermetallic phase and boron B. Commercial boron carbide B₄C powder (Boron carbide B₄C GRADE HS from Höganäs) comprising the following phases: B₁₃C₂ (99%) and graphite (1%) was used. The self-propagating high-temperature synthesis SHS process was used to produce TiAl powder. Ti and Al powders were used in a molar ratio of 1:1.2. The mixture of powders was placed in a reactor with an argon atmosphere at an overpressure of 1.5 atm. The SHS synthesis reaction was initiated locally by heat released during the flow of current through a graphite foil placed in the mixture of powders. The current intensity was 200 A and the flow time was 1 minute.

The TiAl intermetallic phase and boron B were added to the boron carbide B₄C powder in a B₄C:TiAl:B molar ratio of 1:2:1, and then the whole was mixed in a rotary-vibratory mill in an isopropyl alcohol environment for 30 minutes, then dried until complete alcohol evaporation for 30 minutes. The obtained powders were pre-formed into disks having a diameter of 20 mm and a height of 10 mm and subjected to an isostatic pressing under a pressure of 200 MPa. The obtained compacts were subjected to the process of free sintering in an argon atmosphere at a temperature of 1100°C, with a temperature increase of 10°/minute and a holding time at the maximum temperature of 5 minutes.

TiB₂-AlC-AlB₂-TiAl composite consisting of 40% TiB₂, 25% AlC, 34% AlB₂ and 1% TiAl by weight was obtained. The process efficiency was 99.0%.

### Example 3

The following powders were prepared: boron carbide B₄C, TiAl intermetallic phase and boron B. Commercial boron carbide B₄C powder (Boron carbide B₄C GRADE HS from Höganäs) comprising the following phases: B₁₃C₂ (99%) and graphite (1%) was used. The self-propagating high-temperature synthesis SHS process was used to produce TiAl powder. Ti and Al powders were used in a molar ratio of 1:1.2. The mixture of powders was placed in a reactor with an argon atmosphere at an overpressure of 1.5 atm. The SHS synthesis reaction was initiated locally by heat released during the flow of current through a graphite foil placed in the mixture of powders. The current intensity was 200 A and the flow time was 1 minute.

The TiAl intermetallic phase and boron B were added to the boron carbide B₄C powder in a B₄C:TiAl:B molar ratio of 1:2:1, and then the whole was mixed in a rotary-vibratory mill in an isopropyl alcohol environment for 30 minutes, then dried until complete alcohol evaporation for 30 minutes. The obtained powders were pre-formed into disks having a diameter of 20 mm and a height of 10 mm and subjected to an isostatic pressing under a pressure of 200 MPa. The obtained compacts were subjected to the process of free sintering in an argon atmosphere at a temperature of 1400°C, with a temperature increase of 10°/minute and a holding time at the maximum temperature of 5 minutes.

TiB₂-AlC-AlB₂-TiAl composite consisting of 59.2% TiB₂, 25% AlC, 15% AlB₂ and 0.8% TiAl by weight was obtained. The process efficiency was 99.0%.

### Example 4

The following powders were prepared: boron carbide B₄C, TiAl intermetallic phase and boron B. Commercial boron carbide B₄C powder (Boron carbide B₄C GRADE HS from Höganäs) comprising the following phases: B₁₃C₂ (99%) and graphite (1%) was used. The self-propagating high-temperature synthesis SHS process was used to produce TiAl powder. Ti and Al powders were used in a molar ratio of 1:1.2. The mixture of powders was placed in a reactor with an argon atmosphere at an overpressure of 1.5 atm. The SHS synthesis reaction was initiated locally by heat released during the flow of current through a graphite foil placed in the mixture of powders. The current intensity was 200 A and the flow time was 1 minute.

The TiAl intermetallic phase and boron B were added to the boron carbide B₄C powder in a B₄C:TiAl:B molar ratio of 1:2:1, and then the whole was mixed in a rotary-vibratory mill in an isopropyl alcohol environment for 30 minutes, then dried until complete alcohol evaporation for 30 minutes. The obtained powders were pre-formed into disks having a diameter of 20 mm and a height of 10 mm and subjected to an isostatic pressing at a pressure of 200 MPa. The obtained compacts were subjected to the process of free sintering in an argon atmosphere at a temperature of 1600°C, with a temperature increase of 10°/minute and a holding time at the maximum temperature of 5 minutes.

TiB₂-AlC-AlB₂-TiAl composite consisting of 70% TiB₂, 2% AlC, 14.8% AlB₂ and 0.2% TiAl by weight was obtained. The process efficiency was 99.0%.

### Example 5

The following powders were prepared: boron carbide B₄C, TiAl intermetallic phase and boron B. Commercial boron carbide B₄C powder (Boron carbide B₄C GRADE HS from Höganäs) comprising the following phases: B₁₃C₂ (99%) and graphite (1%) was used. The self-propagating high-temperature synthesis SHS process was used to produce TiAl powder. Ti and Al powders were used in a molar ratio of 1:1.2. The mixture of powders was placed in a reactor with an argon atmosphere at an overpressure of 1.5 atm. The SHS synthesis reaction was initiated locally by heat released during the flow of current through a graphite foil placed in the mixture of powders. The current intensity was 200 A and the flow time was 1 minute.

The TiAl intermetallic phase and boron B were added to the boron carbide B₄C powder in a B₄C:TiAl:B molar ratio of 1:2:1, and then the whole was mixed in a rotary-vibratory mill in an isopropyl alcohol environment for 30 minutes, then dried until complete alcohol evaporation for 30 minutes. The obtained powders were pre-formed into disks having a diameter of 20 mm and a height of 10 mm and subjected to an isostatic pressing at a pressure of 200 MPa. The obtained compacts were subjected to the process of free sintering in an argon atmosphere at a temperature of 1050°C, with a temperature increase of 10°/minute and a holding time at the maximum temperature of 5 minutes.

TiB₂-AlC-AlB₂-TiAl composite consisting of 70% TiB₂, 2% AlC, 27% AlB₂ and 1% TiAl by weight was obtained. The process efficiency was 99.0%.

### Example 6

The following powders were prepared: boron carbide B₄C, TiAl intermetallic phase and boron B. Commercial boron carbide B₄C powder (Boron carbide B₄C GRADE HS from Höganäs) comprising the following phases: B₁₃C₂ (99%) and graphite (1%) was used. The self-propagating high-temperature synthesis SHS process was used to produce TiAl powder. Ti and Al powders were used in a molar ratio of 1:1.2. The mixture of powders was placed in a reactor with an argon atmosphere at an overpressure of 1.5 atm. The SHS synthesis reaction was initiated locally by heat released during the flow of current through a graphite foil placed in the mixture of powders. The current intensity was 200 A and the flow time was 1 minute.

The TiAl intermetallic phase and boron B were added to the boron carbide B₄C powder in a B₄C:TiAl:B molar ratio of 1:2:1, and then the whole was mixed in a rotary-vibratory mill in an isopropyl alcohol environment for 30 minutes, then dried until complete alcohol evaporation for 30 minutes. The obtained powders were pre-formed into disks having a diameter of 20 mm and a height of 10 mm and subjected to an isostatic pressing at a pressure of 200 MPa. The obtained compacts were subjected to the process of free sintering in an argon atmosphere at a temperature of 1700°C, with a temperature increase of 10°/minute and a holding time at the maximum temperature of 5 minutes.

TiB₂-AlC-AlB₂-TiAl composite consisting of 57.8% TiB₂, 2% AlC, 40% AlB₂ and 0.2% TiAl by weight was obtained. The process efficiency was 99.0%.

### Example 7

The following powders were prepared: boron carbide B₄C, Ti₃Al intermetallic phase. Commercial boron carbide B₄C powder (Boron carbide B₄C GRADE HS from Höganäs) comprising the following phases: B₁₃C₂ (99%) and graphite (1%) was used. The self-propagating high-temperature synthesis SHS process was used to produce Ti₃Al powder. Ti and Al powders were used in a molar ratio of 3:1.05. The mixture of powders was placed in a reactor with an argon atmosphere at an overpressure of 1.5 atm. The SHS synthesis reaction was initiated locally by heat released during the flow of current through a graphite foil placed in the mixture of powders. The current intensity was 200 A and the flow time was 1 minute.

The Ti₃Al intermetallic phase was added to the boron carbide B₄C powder in a B₄C:Ti₃Al molar ratio of 4:3, and then the whole was mixed in a rotary-vibratory mill in an isopropyl alcohol environment for 30 minutes, then dried until complete alcohol evaporation for 30 minutes. The obtained powders were pre-formed into disks having a diameter of 20 mm and a height of 10 mm and subjected to an isostatic pressing at a pressure of 200 MPa. The obtained compacts were subjected to the process of free sintering in an argon atmosphere at a temperature of 1750°C, with a temperature increase of 10°/minute and a holding time at the maximum temperature of 5 minutes.

TiB₂-TiC-AlB₂-Ti₃Al composite consisting of 70% TiB₂, 10% TiC, 19.2% AlB₂ and 0.4% Ti₃Al by weight was obtained. The process efficiency was 99.6%.

### Example 8

The following powders were prepared: boron carbide B₄C, Ti₃Al intermetallic phase. Commercial boron carbide B₄C powder (Boron carbide B₄C GRADE HS from Höganäs) comprising the following phases: B₁₃C₂ (99%) and graphite (1%) was used. The self-propagating high-temperature synthesis SHS process was used to produce Ti₃Al powder. Ti and Al powders were used in a molar ratio of 3:1.05. The mixture of powders was placed in a reactor with an argon atmosphere at an overpressure of 1.5 atm. The SHS synthesis reaction was initiated locally by heat released during the flow of current through a graphite foil placed in the mixture of powders. The current intensity was 200 A and the flow time was 1 minute.

The Ti₃Al intermetallic phase was added to the boron carbide B₄C powder in a B₄C:Ti₃Al molar ratio of 4:3, and then the whole was mixed in a rotary-vibratory mill in an isopropyl alcohol environment for 30 minutes, then dried until complete alcohol evaporation for 30 minutes. The obtained powders were pre-formed into disks having a diameter of 20 mm and a height of 10 mm and subjected to an isostatic pressing at a pressure of 200 MPa. The obtained compacts were subjected to the process of free sintering in an argon atmosphere at a temperature of 1100°C, with a temperature increase of 10°/minute and a holding time at the maximum temperature of 5 minutes.

TiB₂-TiC-AlB₂-Ti₃Al composite consisting of 30% TiB₂, 30% TiC, 39.4% AlB₂ and 0.6% Ti₃Al by weight was obtained. The process efficiency was 99.2%.

### Example 9

The following powders were prepared: boron carbide B₄C, Ti₃Al intermetallic phase. Commercial boron carbide B₄C powder (Boron carbide B₄C GRADE HS from Höganäs) comprising the following phases: B₁₃C₂ (99%) and graphite (1%) was used. The self-propagating high-temperature synthesis SHS process was used to produce Ti₃Al powder. Ti and Al powders were used in a molar ratio of 3:1.05. The mixture of powders was placed in a reactor with an argon atmosphere at an overpressure of 1.5 atm. The SHS synthesis reaction was initiated locally by heat released during the flow of current through a graphite foil placed in the mixture of powders. The current intensity was 200 A and the flow time was 1 minute.

The intermetallic phase Ti₃Al was added to the boron carbide B₄C powder in a B₄C:Ti₃Al molar ratio of 4:3, and then the whole was mixed in a rotary-vibratory mill in an isopropyl alcohol environment for 30 minutes, then dried until complete alcohol evaporation for 30 minutes. The obtained powders were pre-formed into disks having a diameter of 20 mm and a height of 10 mm and subjected to an isostatic pressing at a pressure of 200 MPa. The obtained compacts were subjected to the process of free sintering in an argon atmosphere at a temperature of 1700°C, with a temperature increase of 10°/minute and a holding time at the maximum temperature of 5 minutes.

TiB₂-TiC-AlB₂-Ti₃Al composite consisting of 35% TiB₂, 25% TiC, 39.6% AlB₂ and 0.4% Ti₃Al by weight was obtained. The process efficiency was 99.2%.

### Example 10

The following powders were prepared: boron carbide B₄C, Ti₃Al intermetallic phase. Commercial boron carbide B₄C powder (Boron carbide B₄C GRADE HS from Höganäs) comprising the following phases: B₁₃C₂ (99%) and graphite (1%) was used. The self-propagating high-temperature synthesis SHS process was used to produce Ti₃Al powder. Ti and Al powders were used in a molar ratio of 3:1.05. The mixture of powders was placed in a reactor with an argon atmosphere at an overpressure of 1.5 atm. The SHS synthesis reaction was initiated locally by heat released during the flow of current through a graphite foil placed in the mixture of powders. The current intensity was 200 A and the flow time was 1 minute.

The Ti₃Al intermetallic phase was added to the boron carbide B₄C powder in a B₄C:Ti₃Al molar ratio of 4:3, and then the whole was mixed in a rotary-vibratory mill in an isopropyl alcohol environment for 30 minutes, then dried until complete alcohol evaporation for 30 minutes. The obtained powders were pre-formed into disks having a diameter of 20 mm and a height of 10 mm and subjected to an isostatic pressing at a pressure of 200 MPa. The obtained compacts were subjected to the process of free sintering in an argon atmosphere at a temperature of 1300°C, with a temperature increase of 10°/minute and a holding time at the maximum temperature of 5 minutes.

TiB₂-TiC-AlB₂-Ti₃Al composite consisting of 30% TiB₂, 10% TiC, 40% AlB₂ and 0.1% Ti₃Al by weight was obtained. The process efficiency was 99.2%.

### Example 11

The following powders were prepared: boron carbide B₄C, Ti₃Al intermetallic phase. Commercial boron carbide B₄C powder (Boron carbide B₄C GRADE HS from Höganäs) comprising the following phases: B₁₃C₂ (99%) and graphite (1%) was used. The self-propagating high-temperature synthesis SHS process was used to produce Ti₃Al powder. Ti and Al powders were used in a molar ratio of 3:1.05. The mixture of powders was placed in a reactor with an argon atmosphere at an overpressure of 1.5 atm. The SHS synthesis reaction was initiated locally by heat released during the flow of current through a graphite foil placed in the mixture of powders. The current intensity was 200 A and the flow time was 1 minute.

The intermetallic phase Ti₃Al was added to the boron carbide B₄C powder in a B₄C:Ti₃Al molar ratio of 4:3, and then the whole was mixed in a rotary-vibratory mill in an isopropyl alcohol environment for 30 minutes, then dried until complete alcohol evaporation for 30 minutes. The obtained powders were pre-formed into disks having a diameter of 20 mm and a height of 10 mm and subjected to an isostatic pressing at a pressure of 200 MPa. The obtained compacts were subjected to the process of free sintering in a nitrogen atmosphere at a temperature of 1400°C, with a temperature increase of 10°/minute and a holding time at the maximum temperature of 5 minutes.

TiB₂-TiC-AlB₂-Ti₃Al composite consisting of 50% TiB₂, 25.4% TiC, 23.6% AlB₂ and 1% Ti₃Al by weight was obtained. The process efficiency was 99.2%.

### Example 12

The following powders were prepared: boron carbide B₄C, TiAl₃ intermetallic phase. Commercial boron carbide B₄C powder (Boron carbide B₄C GRADE HS from Höganäs) comprising the following phases: B₁₃C₂ (99%) and graphite (1%) was used. The self-propagating high-temperature synthesis SHS process was used to produce TiAl₃ powder. Ti and Al powders were used in a molar ratio of 1:3. The mixture of powders was placed in a reactor with an argon atmosphere at an overpressure of 1.5 atm. The SHS synthesis reaction was initiated locally by heat released during the flow of current through a graphite foil placed in the mixture of powders. The current intensity was 200 A and the flow time was 1 minute.

The TiAl₃ intermetallic phase was added to the boron carbide B₄C powder in a B₄C:TiAl₃ molar ratio of 6:5, and then the whole was mixed in a rotary-vibratory mill in an isopropyl alcohol environment for 30 minutes, then dried until complete alcohol evaporation for 30 minutes. The obtained powders were pre-formed into disks having a diameter of 20 mm and a height of 10 mm and subjected to an isostatic pressing at a pressure of 200 MPa. The obtained compacts were subjected to the process of free sintering in an argon atmosphere at a temperature of 1750°C, with a temperature increase of 10°/minute and a holding time at the maximum temperature of 5 minutes.

TiB₂-Al₄C₃-AlB₂-TiAl₃ composite consisting of 40% TiB₂, 30% Al₄C₃, 19.2% AlB₂ and 0.1% TiAl₃ by weight was obtained. The process efficiency was 99.9%.

### Example 13

The following powders were prepared: boron carbide B₄C, TiAl₃ intermetallic phase. Commercial boron carbide B₄C powder (Boron carbide B₄C GRADE HS from Höganäs) comprising the following phases: B₁₃C₂ (99%) and graphite (1%) was used. The self-propagating high-temperature synthesis SHS process was used to produce TiAl₃ powder. Ti and Al powders were used in a molar ratio of 1:3. The mixture of powders was placed in a reactor with an argon atmosphere at an overpressure of 1.5 atm. The SHS synthesis reaction was initiated locally by heat released during the flow of current through a graphite foil placed in the mixture of powders. The current intensity was 200 A and the flow time was 1 minute.

The TiAl₃ intermetallic phase was added to the boron carbide B₄C powder in a B₄C:TiAl₃ molar ratio of 6:5, and then the whole was mixed in a rotary-vibratory mill in an isopropyl alcohol environment for 30 minutes, then dried until complete alcohol evaporation for 30 minutes. The obtained powders were pre-formed into disks having a diameter of 20 mm and a height of 10 mm and subjected to an isostatic pressing at a pressure of 200 MPa. The obtained compacts were subjected to the process of free sintering in an argon atmosphere at a temperature of 1050°C, with a temperature increase of 10°/minute and a holding time at the maximum temperature of 5 minutes.

TiB₂-Al₄C₃-AlB₂-TiAl₃ composite consisting of 30% TiB₂, 29.9% Al₄C₃, 40% AlB₂ and 0.1% TiAl₃ by weight was obtained. The process efficiency was 99.9%.

### Example 14

The following powders were prepared: boron carbide B₄C, TiAl₃ intermetallic phase. Commercial boron carbide B₄C powder (Boron carbide B₄C GRADE HS from Höganäs) comprising the following phases: B₁₃C₂ (99%) and graphite (1%) was used. The self-propagating high-temperature synthesis SHS process was used to produce TiAl₃ powder. Ti and Al powders were used in a molar ratio of 1:3. The mixture of powders was placed in a reactor with an argon atmosphere at an overpressure of 1.5 atm. The SHS synthesis reaction was initiated locally by heat released during the flow of current through a graphite foil placed in the mixture of powders. The current intensity was 200 A and the flow time was 1 minute.

The TiAl₃ intermetallic phase was added to the boron carbide B₄C powder in a B₄C:TiAl₃ molar ratio of 6:5, and then the whole was mixed in a rotary-vibratory mill in an isopropyl alcohol environment for 30 minutes, then dried until complete alcohol evaporation for 30 minutes. The obtained powders were pre-formed into disks having a diameter of 20 mm and a height of 10 mm and subjected to an isostatic pressing at a pressure of 200 MPa. The obtained compacts were subjected to the process of free sintering in a nitrogen atmosphere at a temperature of 1400°C, with a temperature increase of 10°/minute and a holding time at the maximum temperature of 5 minutes.

TiB₂-Al₄C₃-AlB₂-TiAl₃ composite consisting of 60% TiB₂, 30% Al₄C₃, 8.5% AlB₂ and 1.5% TiAl₃ by weight was obtained. The process efficiency was 99.9%.

### Example 15

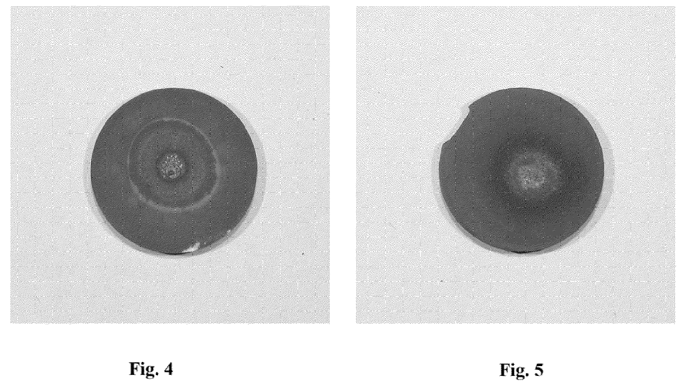

The obtained composites (from Examples 1 to 14) were subjected to a thermal ablation test in an acetylene-oxygen flame at temperatures of 1750 and 1800°C, with various holding time ranging from 1 s to 5 minutes. In the conducted test, the surface change of the tested composite samples was determined in order to establish the effect of temperature on the structure and mechanical parameters of the composites produced in accordance with the invention. As a result of the test, it was found that the composites produced according to the invention are characterized by high thermal resistance, i.e. they do not crack as in the case of commercial materials based on boron carbide, which, as a result of high temperatures and poor heat dissipation, crack in the temperature range from 1400 to 1600°C and no longer retain their shape. In the case of using composites produced according to the invention, the mechanical parameters do not deteriorate with the temperature increase and remain the same as without the thermal ablation. The results of the ablation performed at 1750 and 1800°C are shown on Fig. 4 and Fig. 5, respectively.

The composites obtained in accordance with the invention (at various synthesis temperatures) were subjected to mechanical processing to obtain components for gas turbines.

## Claims

1. A method for producing a high-temperature refractory composite from boron carbide B₄C and an intermetallic phase of the Ti-Al system, **characterized in that** a powder of the intermetallic phase of the Ti-Al system and optionally boron B is added to the boron carbide B₄C powder, and then the whole is mixed in an isopropyl alcohol environment for 1 to 60 minutes and dried until complete alcohol evaporation for 20 to 120 minutes, after which the obtained powder is granulated, and then the shaped pieces are pre-formed and subjected to an isostatic pressing at a pressure of 100 to 200 MPa, and the obtained compacts are subjected to a free sintering process in an argon or nitrogen atmosphere, at a temperature of 1050 to 1750°C, with a temperature increase of 2 to 10°C/minute and a holding time at the maximum temperature of 5 to 30 minutes, to obtain the high-temperature refractory composite,
wherein as the intermetallic phase of the Ti-Al system is used:
a) TiAl in a B₄C:TiAl:B molar ratio of 1:2:1, to obtain a high-temperature refractory composite TiB₂-AlC-AlB₂-TiAl consisting of 40 to 70% TiB₂, 2 to 25% AlC, 5 to 40% AlB₂ and 0.2 to 1.0% TiAl by weight, or
b) Ti₃Al in a B₄C:Ti₃Al molar ratio of 4:3, to obtain a high-temperature refractory composite TiB₂-TiC-AlB₂-Ti₃Al consisting of 30 to 70% TiB₂, 10 to 30% TiC, 5 to 40% AlB₂ and 0.1 to 1.0% Ti₃Al by weight, or
c) TiAl₃ in a B₄C:TiAl₃ molar ratio of 6:5, to obtain a high-temperature refractory composite TiB₂-Al₄C₃-AlB₂-TiAl₃ consisting of 30 to 70% TiB₂, 5 to 30% Al₄C₃, 5 to 40% AlB₂ and 0.1 to 1.5% TiAl₃ by weight,
and the process efficiency is at least 99%.

2. The method according to claim 1, **characterized in that** mixing of the powders is carried out for 20 to 60 minutes in a rotary-vibratory mill or for 1 to 40 minutes in a planetary mill.
